# FASCICULE DE BREVET EUROPEEN

(11) **EP 3 136 071 B1**
(45) Date de publication et mention de la délivrance du brevet: **28.03.2018**
(21) Numéro de dépôt: 15182362.2
(22) Date de dépôt: 25.08.2015
(51) Int. Cl.: G01L 7/10, G01L 7/14, G01L 27/00, G01C 5/06, G04B 47/06

(54) **DISPOSITIF ET PROCEDE D'ETALONNAGE D'UN DISPOSITIF DE MESURE DE L'ALTITUDE**
KALIBRIERVORRICHTUNG UND -VERFAHREN EINER HÖHENMESSVORRICHTUNG
DEVICE AND METHOD FOR CALIBRATING A DEVICE FOR MEASURING ALTITUDE

(43) Date de publication de la demande: 01.03.2017
(73) Titulaire: The Swatch Group Research and Development Ltd., 2074 Marin (CH)
(72) Inventeur: Ferri, Yvan, 1004 Lausanne (CH); Rebeaud, Nicolas, 1189 Saubraz (CH)
(74) Mandataire: Supper, Marc

(56) Documents cités:
- EP-A1- 0 011 681
- EP-A1- 0 633 458
- EP-A1- 2 799 829
- FR-A1- 2 343 998
- US-A- 3 874 242

## Description

### Domaine de l'invention

La présente invention concerne un dispositif ainsi qu'un procédé d'étalonnage d'un dispositif de mesure de l'altitude. Plus précisément, la présente invention concerne un dispositif et un procédé d'étalonnage qui permettent de calibrer un dispositif de mesure de l'altitude de façon simple, reproductible et rapide.

### Arrière-plan technologique de l'invention

De nombreux dispositifs de mesure de l'altitude sont connus, parmi lesquels les altimètres de parachutisme dont l'élément sensible est un capteur de pression de type anéroïde. De tels altimètres comprennent typiquement un cadran dont le tour est gradué entre 0 et 4000 mètres d'altitude. Une analyse faite par la Demanderesse de plusieurs altimètres achetés dans le commerce fait ressortir une hystérèse. Ce défaut de linéarité a été mis en évidence par le calcul du travail des forces de frottement dans le mécanisme de ces altimètres. Le réglage du mécanisme a donc été effectué à la descente car l'erreur absolue de mesure de l'altitude est plus faible lorsque l'altitude diminue. Le réglage de ces altimètres a été effectué entre 0 et 3000 mètres d'altitude car il a été observé que l'erreur de mesure augmentait au-delà de 3000 mètres d'altitude. C'est ainsi que l'erreur maximale entre 0 et 3000 mètres d'altitude a atteint 21 mètres pour l'un des altimètres, et 34 mètres pour un autre altimètre. On voit donc que les altimètres de parachutisme qui ont été analysés présentent un défaut de linéarité qui conduit à une certaine imprécision de la mesure de l'ordre de 1%. En outre, étant donné la dispersion des caractéristiques des capsules anéroïdes et les tolérances de fabrication avec lesquelles sont conçus de tels altimètres, une opération préalable d'étalonnage est requise. Dans le cas des altimètres du type mentionné ci-dessus, cette opération d'étalonnage est assez fastidieuse. Elle est effectuée manuellement par une personne spécialement formée à cette tâche et consiste à lire la valeur affichée par l'altimètre successivement sous une pression équivalente à celle qui règne au niveau de la mer, puis par exemple sous une pression équivalente à 4000 mètres d'altitude, puis à nouveau sous une pression équivalente à 0 mètre et ainsi de suite. A chaque fois, le mécanisme est réglé pour que l'altitude affichée corresponde à la valeur de la pression ambiante. En procédant ainsi par itérations successives, on réduit progressivement l'erreur de mesure de l'altimètre.
Le document EP 2 799 829 A1 concerne un dispositif d'étalonnage d'un instrument de mesure d'une quantité physique telle que la pression.

### Résumé de l'invention

La présente invention a pour but de remédier aux problèmes mentionnés ci-dessus ainsi qu'à d'autres encore en procurant un dispositif de mesure de l'altitude qui soit précis et dont l'hystérèse soit aussi réduite que possible.

A cet effet, la présente invention concerne un dispositif étanche d'étalonnage d'un dispositif de mesure de l'altitude, ce dispositif de mesure de l'altitude comprenant un capteur de pression atmosphérique agencé pour se comprimer ou se détendre selon une direction rectiligne en fonction de la pression atmosphérique à mesurer qui augmente ou qui diminue, les mouvements de déformation du capteur de pression atmosphérique étant transformés, via un système de transmission, en un mouvement de pivotement dans un plan perpendiculaire à la direction rectiligne de déformation du capteur de pression atmosphérique d'un système d'actionnement qui entraîne une aiguille indicatrice en pivotement, cette aiguille indicatrice se déplaçant en regard d'une échelle circulaire graduée, le capteur de pression atmosphérique étant monté sur un siège qui est fixé dans un support, ce support étant doté sur sa périphérie extérieure d'un premier filetage qui coopère avec un second filetage prévu sur la périphérie intérieure d'un couvercle, le système de transmission comprenant un palpeur formé d'un bras par une extrémité libre duquel le palpeur est en appui sur le capteur de pression atmosphérique, le palpeur étant fixé rigidement sur un axe de transmission qui s'étend selon une direction perpendiculaire à la direction rectiligne de déformation du capteur de pression atmosphérique, l'axe de transmission étant monté mobile selon son axe de symétrie longitudinale entre une vis de réglage et une lame élastique, le dispositif étanche d'étalonnage étant caractérisé en ce qu'il comporte une prise d'air qui permet d'ajuster la pression à l'intérieur de ce dispositif d'étalonnage selon les besoins, le dispositif d'étalonnage comprenant également un premier et un second boutons pour le réglage du dispositif de mesure de l'altitude, le premier bouton étant prolongé vers l'intérieur de la cuve étanche par une lame de tournevis grâce à laquelle on peut actionner la vis de réglage permettant de régler la position axiale de l'axe de transmission, et le second bouton comprenant une tige qui, à son extrémité libre, porte un pignon qui coopère avec une roue dentée qui s'étend horizontalement et qui porte dans sa planche deux goupilles qui viennent se loger dans deux trous correspondants ménagés dans le support de façon qu'en actionnant le second bouton dans un sens ou l'autre, il est possible de visser ou de dévisser le support et de faire monter ou descendre le capteur de pression atmosphérique.

Selon une caractéristique complémentaire de l'invention, un joint d'étanchéité est engagé sur la lame de tournevis pour garantir l'étanchéité du passage du premier bouton, et un joint d'étanchéité est engagé sur la tige pour garantir l'étanchéité du passage du second bouton.

Le dispositif étanche d'étalonnage est du type d'une cuve fermée par une glace avec interposition d'un joint d'étanchéité.

Grâce à ces caractéristiques, la présente invention procure un dispositif d'étalonnage d'un dispositif de mesure de l'altitude grâce auquel les opérations d'étalonnage sont considérablement simplifiées et peuvent être automatisées si souhaité. Ce résultat remarquable est atteint grâce au fait que deux opérations de réglage effectuées pour l'une à une pression atmosphérique équivalent au niveau de la mer, et pour l'autre par exemple à une pression correspondant à 4000 mètres d'altitude, suffisent pour étalonner le dispositif de mesure de l'altitude selon l'invention. En outre, les opérations de réglage consistent simplement, pour les deux altitudes sélectionnées, à amener la ligne des points de contact entre la goupille de transmission et le râteau parallèle à l'axe de transmission, puis à ajuster la position du capteur de pression atmosphérique relativement aux autres composants du dispositif de mesure de l'altitude, ce qui peut être contrôlé visuellement très facilement même par un opérateur peu expérimenté, voire par une caméra. La précision avec laquelle il est possible d'effectuer l'étalonnage permet d'obtenir un dispositif de mesure de l'altitude présentant une hystérèse faible, voire nulle, ce qui permet à l'aiguille indicatrice de se déplacer de manière linéaire et donc d'effectuer, le cas échéant, plus d'un tour de cadran et ainsi de pouvoir mesurer avec précision des altitudes plus élevées.

L'invention concerne également un procédé d'étalonnage d'un dispositif de mesure de l'altitude au moyen d'un dispositif d'étalonnage, ce dispositif de mesure de l'altitude comprenant un capteur de pression atmosphérique agencé pour se comprimer ou se détendre selon une direction rectiligne en fonction de la pression atmosphérique à mesurer qui augmente ou qui diminue, les mouvements de déformation du capteur de pression atmosphérique étant transformés, via un système de transmission, en un mouvement de pivotement dans un plan perpendiculaire à la direction rectiligne de déformation du capteur de pression atmosphérique d'un système d'actionnement qui entraîne une aiguille indicatrice en pivotement, cette aiguille indicatrice se déplaçant en regard d'une échelle circulaire graduée, le capteur de pression atmosphérique étant monté sur un support, ce support étant doté sur sa périphérie extérieure d'un premier filetage qui coopère avec un second filetage prévu sur la périphérie intérieure d'un couvercle, le système de transmission comprenant un palpeur formé d'un bras par une extrémité libre duquel le palpeur est en appui sur le capteur de pression atmosphérique, le palpeur étant fixé rigidement sur un axe de transmission qui s'étend selon une direction perpendiculaire à la direction rectiligne de déformation du capteur de pression atmosphérique, l'axe de transmission étant monté mobile selon son axe de symétrie longitudinale entre une vis de réglage et une lame élastique, une goupille de transmission fixée rigidement sur l'axe de transmission coopérant avec le système d'actionnement selon un segment rectiligne de points de contact pour communiquer à ce système d'actionnement les mouvements de déformation du capteur de pression atmosphérique, le procédé d'étalonnage étant caractérisé en ce qu'il comprend les étapes qui consistent à placer le système de mesure de l'altitude sous une pression atmosphérique de 1013,25 hPa grâce au dispositif d'étalonnage qui comprend une prise d'air permettant d'ajuster la pression à l'intérieur du dispositif d'étalonnage selon les besoins, et à agir sur le système de transmission de façon à amener le segment rectiligne de points de contact parallèle à l'axe de transmission grâce au dispositif d'étalonnage qui comprend un premier et un second boutons, le premier bouton étant prolongé vers l'intérieur du dispositif d'étalonnage par une lame de tournevis grâce à laquelle on peut actionner la vis de réglage permettant de régler la position axiale de l'axe de transmission, et le second bouton comprenant une tige grâce à laquelle il est possible de visser ou de dévisser le support et de faire monter ou descendre le capteur de pression atmosphérique en actionnant le second bouton dans un sens ou l'autre, puis à réduire la pression atmosphérique à une valeur choisie correspondant à une altitude déterminée et à ajuster la position du capteur de pression atmosphérique de manière à amener l'aiguille indicatrice en regard de la valeur d'altitude sur l'échelle circulaire graduée correspondant à la valeur choisie de la pression atmosphérique.

### Brève description des figures

D'autres caractéristiques et avantages de la présente invention ressortiront plus clairement de la description détaillée qui suit d'un mode de réalisation d'un dispositif d'étalonnage selon l'invention d'un dispositif de mesure de l'altitude, cet exemple étant donné à titre purement illustratif et non limitatif seulement, en liaison avec le dessin annexé sur lequel :
- la figure 1 est une vue en perspective d'une boîte de montre-bracelet à l'intérieur de laquelle est logé un dispositif de mesure de l'altitude ;
- la figure 2 est une vue en perspective du dispositif de mesure de l'altitude ;
- la figure 3 est une vue en perspective et en éclaté d'un boîtier formé d'un couvercle et d'un support et à l'intérieur duquel est logé le dispositif de mesure de l'altitude ;
- la figure 4 est une vue en coupe selon l'axe midi-six heures de la boîte de montre-bracelet à l'intérieur de laquelle est logé le dispositif de mesure de l'altitude ;
- la figure 5 est une vue en perspective du dispositif de mesure de l'altitude contraint par un ressort hélicoïdal afin de maintenir le palpeur en contact permanent avec le capteur de pression atmosphérique ;
- la figure 6 est une vue en perspective du dispositif de mesure de l'altitude contraint par un ressort spiral afin de maintenir le palpeur en contact permanent avec le capteur de pression atmosphérique ;
- la figure 7 est une vue en perspective du boîtier de la figure 3 à l'intérieur duquel est placé le dispositif de mesure de l'altitude pour son étalonnage ;
- la figure 8 est une vue en perspective et en éclaté de la cuve pour l'étalonnage du dispositif de mesure de l'altitude selon l'invention ;
- la figure 9 est une vue en perspective de la cuve à l'intérieur de laquelle est placé le dispositif de mesure de l'altitude selon l'invention pour son étalonnage ;
- la figure 10 est une vue en perspective et en éclaté du système d'entraînement permettant d'ajuster la hauteur du capteur de pression atmosphérique, et
- la figure 11 est une vue partielle en perspective du système d'immobilisation du dispositif de mesure de l'altitude selon l'invention à l'intérieur de la cuve étanche.

### Description détaillée d'un mode de réalisation de l'invention

La présente invention procède de l'idée générale inventive qui consiste à procurer un dispositif de même qu'un procédé d'étalonnage d'un dispositif de mesure de l'altitude qui permettent d'étalonner un tel dispositif de mesure de l'altitude de façon simple, rapide et précise. A cet effet, la présente invention procure un dispositif de même qu'un procédé d'étalonnage d'un dispositif de mesure de l'altitude qui moyennant seulement deux mesures effectuées pour l'une à une pression atmosphérique correspondant au niveau de la mer et pour l'autre à une pression atmosphérique inférieure correspondant à une altitude donnée permettent d'atteindre ce résultat.

Désigné dans son ensemble par la référence numérique générale 1, le dispositif de mesure de l'altitude comprend un capteur de pression atmosphérique 2 agencé pour se déformer géométriquement selon une direction rectiligne sous l'effet d'une fluctuation de la pression atmosphérique à mesurer.

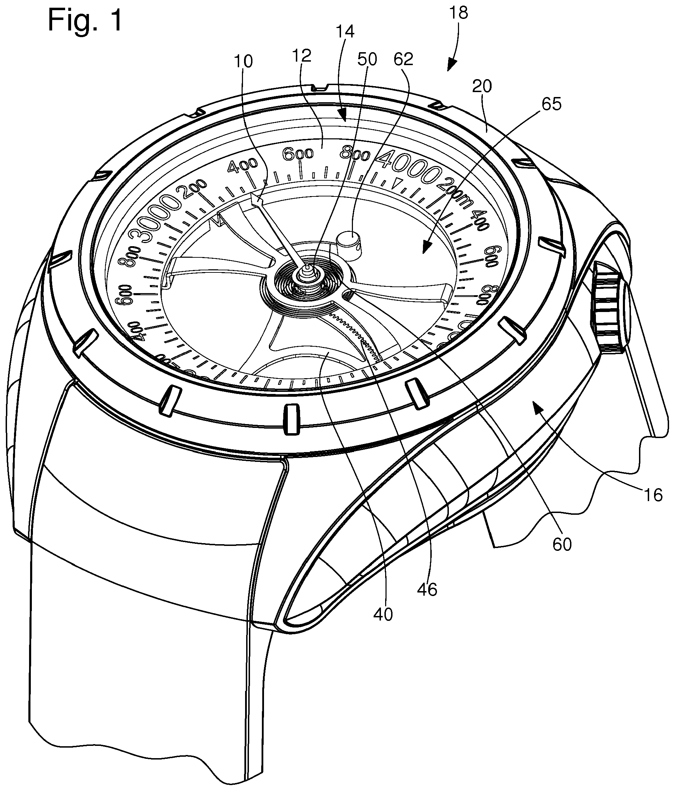

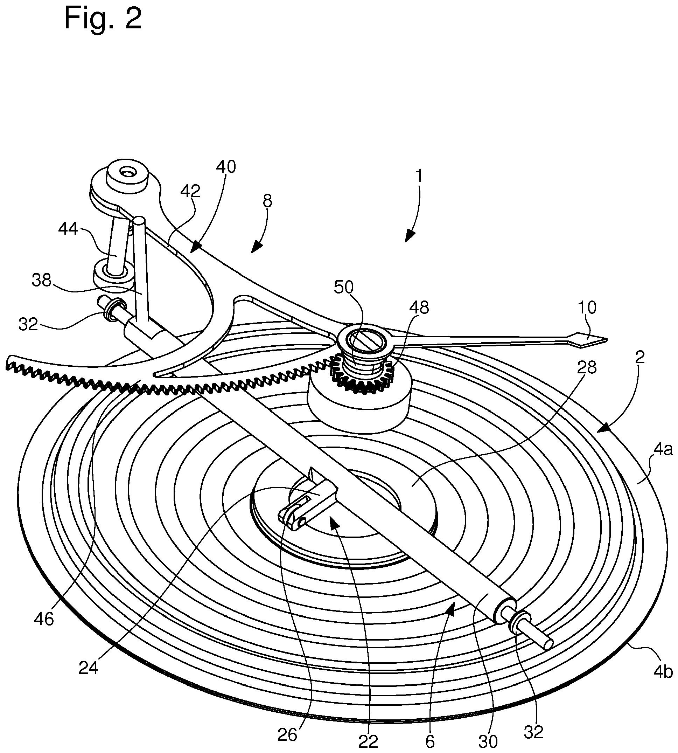

Comme il ressort notamment de la figure 2, le capteur de pression atmosphérique 2 est préférentiellement un capteur de pression du type anéroïde. Il s'agit d'une boîte ronde, plate, généralement métallique, formée de deux tôles minces ondulées supérieure 4a et inférieure 4b assemblées entre elles par soudage. Cette boîte est étanche puisqu'elle a été scellée sous vide partiel. Le capteur de pression atmosphérique 2 se comprime ou se détend en fonction des variations de la pression atmosphérique, ce qui provoque le rapprochement ou l'éloignement des deux tôles supérieure 4a et inférieure 4b l'une de l'autre. Les mouvements de déformation du capteur de pression atmosphérique 2 sont transformés, via un système de transmission 6, en un mouvement de pivotement dans un plan perpendiculaire à la direction rectiligne de déformation du capteur de pression atmosphérique 2 d'un système d'actionnement 8 qui entraîne une aiguille indicatrice 10 en pivotement. Comme visible sur la figure 1, cette aiguille indicatrice 10 se déplace en regard d'une échelle circulaire 12 ménagée sur un rehaut 14 et graduée par exemple entre 0 et 4000 mètres par pas de 50 mètres. Ce rehaut 14 est logé dans une boîte 16 d'une montre-bracelet 18 et peut être entraîné en pivotement par l'utilisateur au moyen d'une lunette rotative 20. On notera que dans l'exemple représenté au dessin, le capteur de pression atmosphérique 2 se déforme selon une direction rectiligne verticale.

Le système de transmission 6 comprend un palpeur 22 formé d'un bras 24 qui, de manière préférée mais non exclusive, est muni à son extrémité libre d'une roulette 26 par laquelle le palpeur 22 est en contact avec la tôle supérieure 4a du capteur de pression atmosphérique 2. Avantageusement, une rondelle 28 sur laquelle la roulette 26 est en appui est fixée sur la tôle supérieure 4a du capteur de pression atmosphérique 2. Cette rondelle 28, de même que la roulette 26, ont pour but de minimiser autant que possible les forces de frottement entre le palpeur 22 et le capteur de pression atmosphérique 2 et donc d'améliorer la précision du dispositif de mesure de l'altitude 1.

Le palpeur 22 est fixé rigidement sur un axe de transmission 30 qui s'étend selon une direction perpendiculaire à la direction rectiligne de déformation du capteur de pression atmosphérique 2. Dans l'exemple représenté au dessin, l'axe de transmission 30 s'étend donc horizontalement.

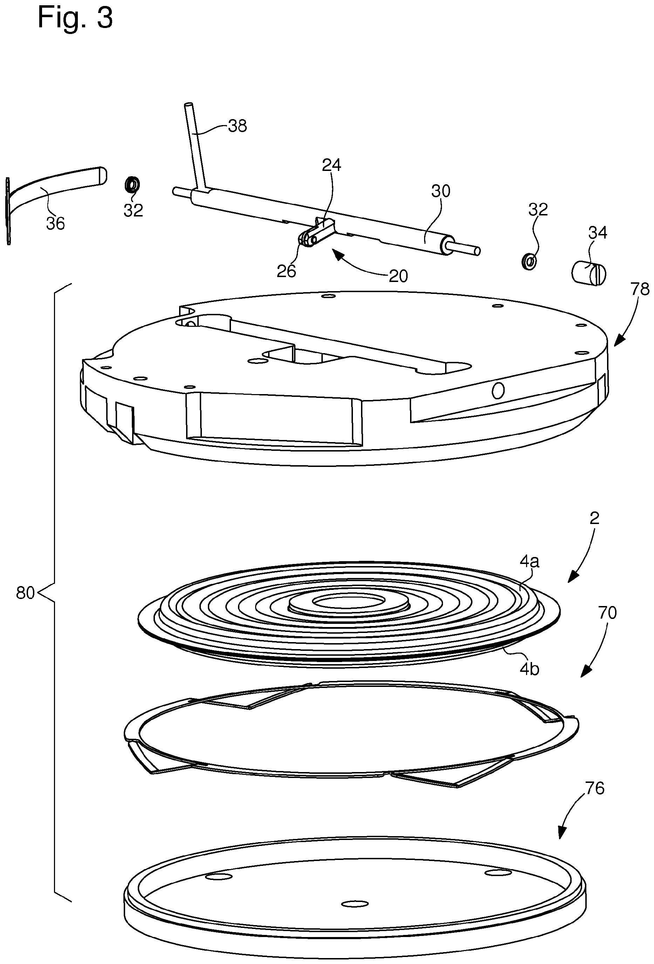

L'axe de transmission 30 dont les extrémités sont munies de pierres 32 est agencé pour pivoter sous l'effet des mouvements de déformation du capteur de pression atmosphérique 2 qui lui sont transmis par le palpeur 22. Notons également que l'axe de transmission 30 est monté mobile axialement sans jeu entre une vis de réglage 34 et une lame élastique 36 (figure 3). Par action sur la vis de réglage 34, il est ainsi possible de régler la position longitudinale de l'axe de transmission 30.

Selon encore une autre caractéristique, une goupille de transmission 38 fixée rigidement sur l'axe de transmission 30 communique au système d'actionnement 8 les mouvements de déformation du capteur de pression atmosphérique 2.

Plus précisément, le système d'actionnement 8 comprend un râteau 40 contre lequel la goupille de transmission 38 est en appui selon un segment rectiligne 42 de points de contact. Comme on le verra ci-après, ce segment rectiligne 42 sert de repère lors de l'étalonnage du dispositif de mesure de l'altitude 1. En effet, le dispositif de mesure de l'altitude 1 est convenablement réglé pour l'altitude au niveau de la mer lorsque le segment rectiligne 42 de points de contact s'étend parallèlement à l'axe de transmission 30. Pour cela, on ajuste la position axiale de l'axe de transmission 30.

Le râteau 40 est monté pivotant dans un plan horizontal autour d'un axe de pivotement vertical 44. Le râteau 40 est pourvu d'un secteur denté 46 en arc de cercle qui engrène avec un pignon 48 solidaire d'un tube 50 sur lequel est montée l'aiguille indicatrice 10. Le tube 50 peut être pivoté sur le canon des heures du mouvement d'horlogerie. Mais, dans ce cas, on peut observer des forces de frottement qui peuvent fausser la mesure. C'est pourquoi on préfère faire passer la chaussée à l'intérieur du tube 50 sans qu'il y ait contact entre la chaussée et le tube 50.

Selon encore une autre caractéristique, le dispositif de mesure de l'altitude 1 comprend des moyens élastiques agencés pour maintenir le palpeur 22 en contact permanent avec le capteur de pression atmosphérique 2.

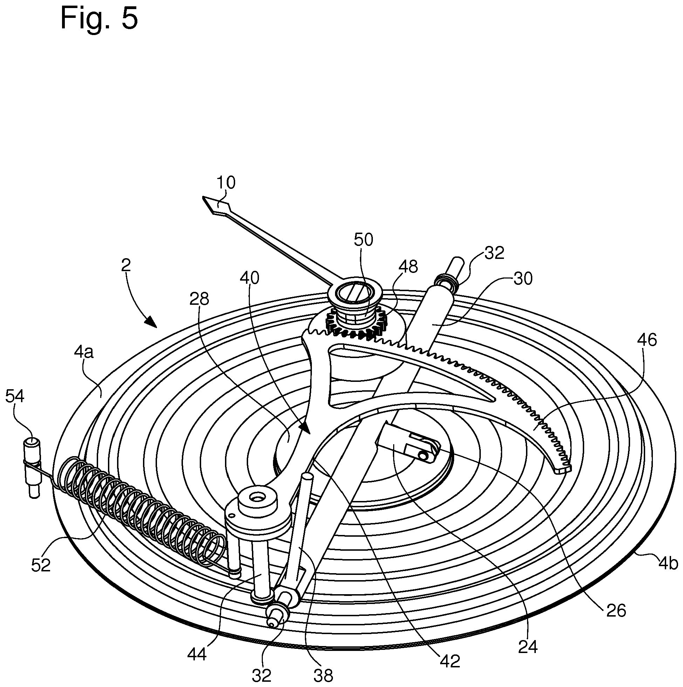

Selon une première variante (figure 5), les moyens élastiques comprennent un ressort hélicoïdal 52 fixé à une première extrémité sur un piton 54 et à une autre extrémité sur le râteau 40 sur lequel il exerce une force élastique de rappel. Cette force de rappel élastique est transmise au palpeur 22 via la goupille de transmission 38 et l'axe de transmission 30.

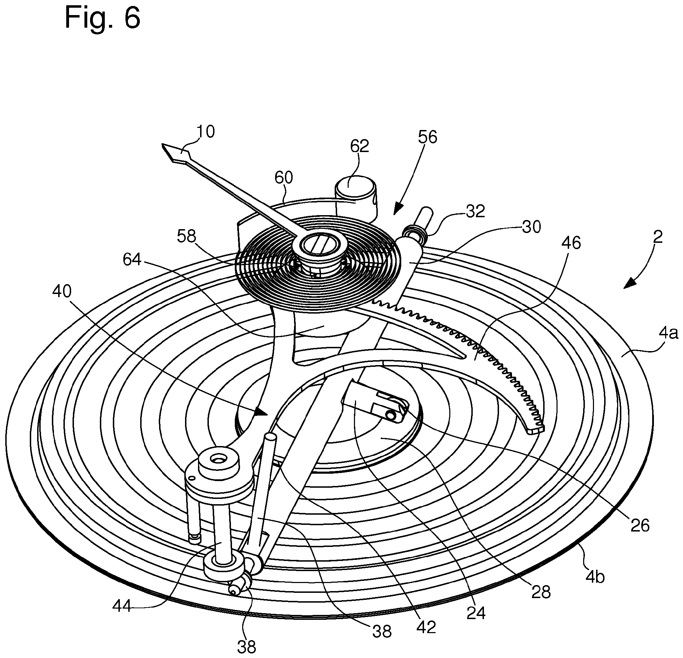

Selon une seconde variante (figure 6), les moyens élastiques comprennent un ressort en spires 56 dont une courbe à l'intérieur 58 est fixée sur le tube 50 sur lequel est montée l'aiguille indicatrice 10 et dont une courbe à l'extérieur 60 est fixée sur un piton 62 solidaire de la boîte 16 de la montre-bracelet 18. Préférentiellement mais non obligatoirement, le tube 50 sur lequel est montée l'aiguille indicatrice 10 est fixé sur l'intérieur d'un roulement à billes 64 lui-même fixé sur un cadran 65 de la montre-bracelet 18.

Ces moyens élastiques, à savoir ressort hélicoïdal 52 ou ressort en spires 56, permettent de maintenir le palpeur 22 en contact avec le capteur de pression atmosphérique 2 et de compenser les éventuels jeux entre la denture du secteur denté 46 du râteau 40 et la denture du pignon 48.

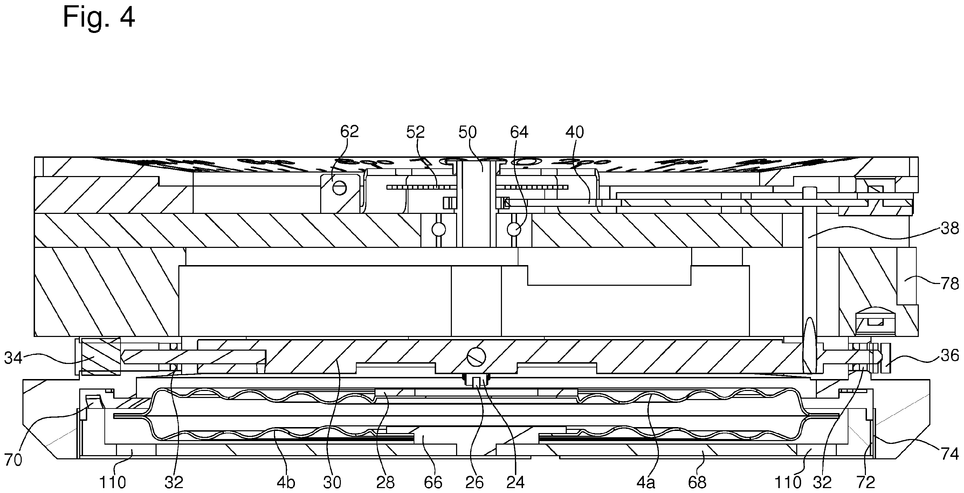

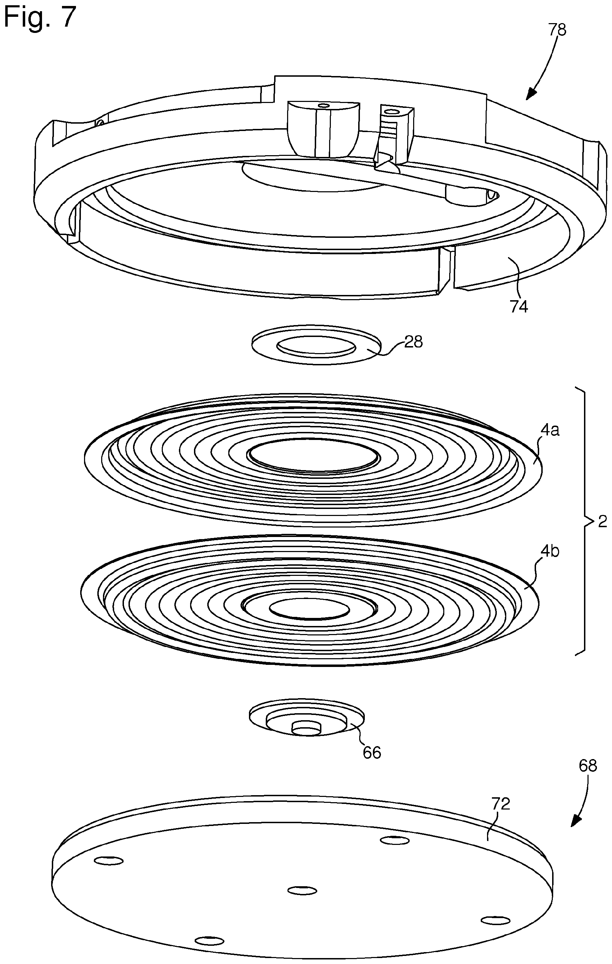

Selon encore une autre caractéristique (figure 7), le capteur de pression atmosphérique 2 est monté sur un siège 66 qui est par exemple chassé et collé dans un support 68 avec interposition d'une bride 70 de rattrapage de jeu entre le capteur de pression atmosphérique 2 et le support 68 (figures 3 et 4). Ce support 68 est doté sur sa périphérie extérieure d'un premier filetage 72 qui coopère avec un second filetage 74 prévu sur la périphérie intérieure d'un couvercle 78 qui, avec le support 68, forme un boîtier 80. Le support 68 peut donc être vissé ou dévissé, ce qui permet de régler précisément la hauteur du capteur de pression atmosphérique 2 à l'intérieur de la boîte 16 de la montre 18 et ainsi de compenser les éventuelles variations dimensionnelles du capteur de pression atmosphérique 2 dues aux tolérances de fabrication.

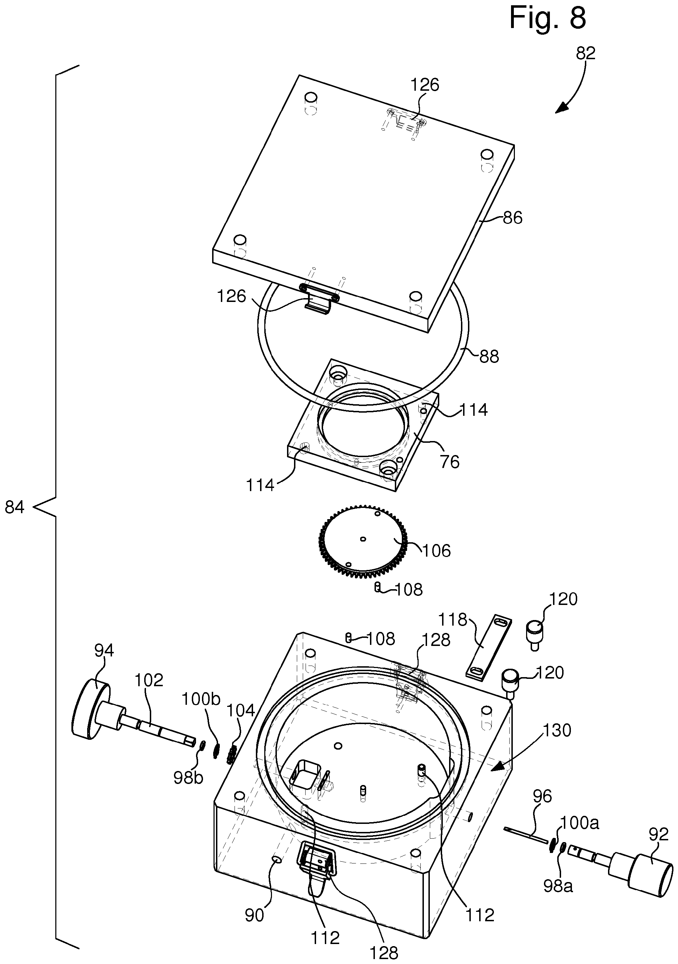

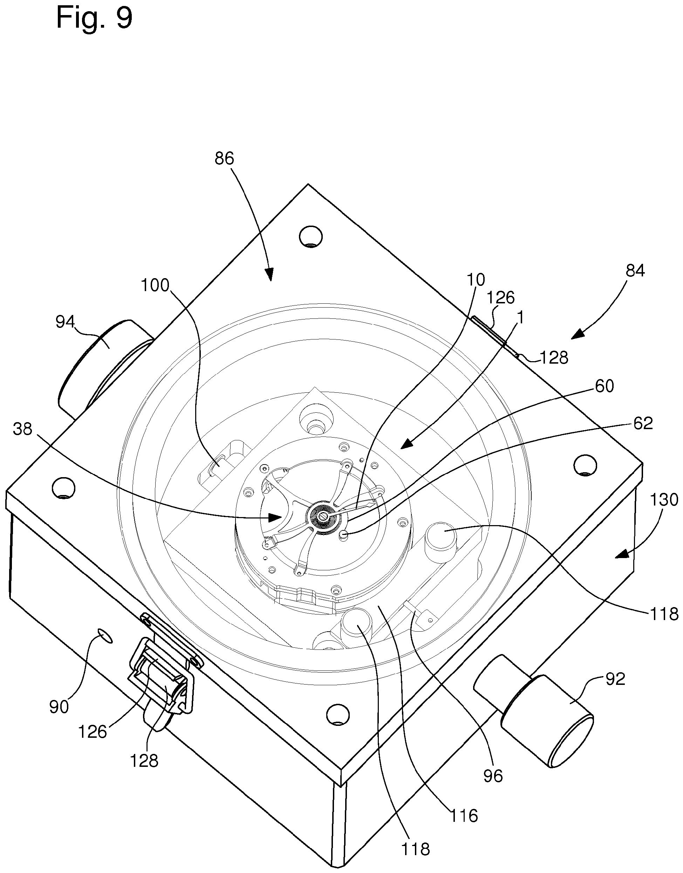

Pour son étalonnage (figures 8 et 9), le dispositif de mesure de l'altitude 1 est placé à l'intérieur d'un dispositif étanche 82 par exemple du genre d'une cuve étanche 84 fermée par une glace 86 avec interposition d'un joint d'étanchéité 88. Cette cuve étanche 84 comporte une prise d'air 90 qui permet d'ajuster la pression à l'intérieur de cette cuve 84 selon les besoins.

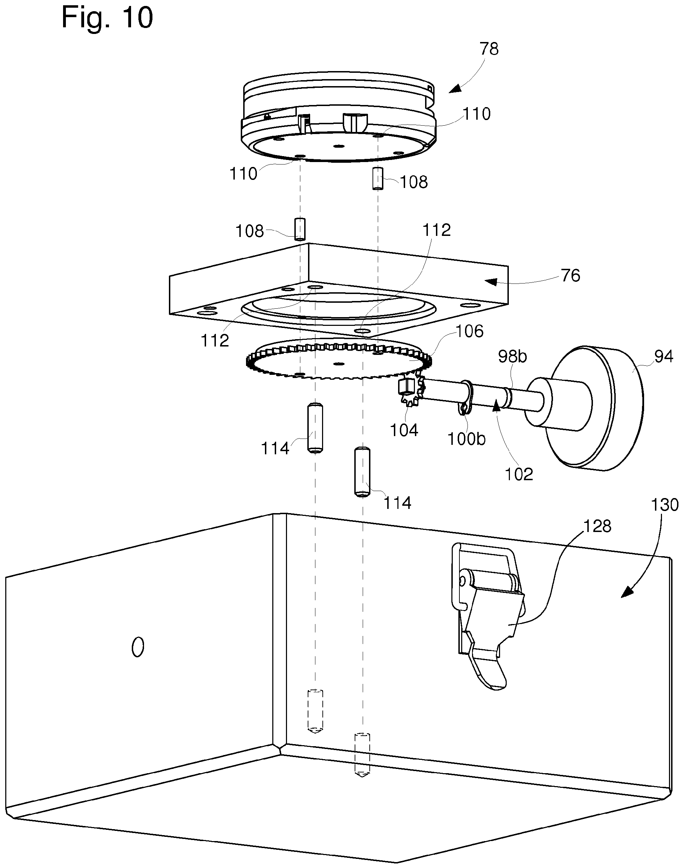

La cuve étanche 84 comprend également un premier et un second boutons 92 et 94 pour le réglage du dispositif de mesure de l'altitude 1. Le premier bouton 92 est prolongé vers l'intérieur de la cuve étanche 84 par une lame de tournevis 96 pivotée sur une pierre 98a grâce à laquelle on peut actionner la vis de réglage 34 permettant de régler la position axiale de l'axe de transmission 30. Un joint d'étanchéité 100a est disposé sur la lame de tournevis 96 pour garantir l'étanchéité du passage du premier bouton 92. Le second bouton 94 comprend une tige 102 pivotée sur une pierre 98b et sur laquelle est engagé un joint d'étanchéité 100b pour garantir l'étanchéité du passage du second bouton 94. A son extrémité libre, la tige 102 porte un pignon 104 qui coopère avec une roue dentée 106 qui s'étend horizontalement (figure 10). Cette roue dentée 106 porte dans sa planche deux goupilles 108 disposées de manière diamétralement opposée qui viennent se loger dans deux trous correspondants 110 ménagés dans le support 68. En tournant le second bouton 94 dans un sens ou l'autre, il est ainsi possible de visser ou de dévisser le support 68 et donc de faire monter ou descendre le capteur de pression atmosphérique 2.

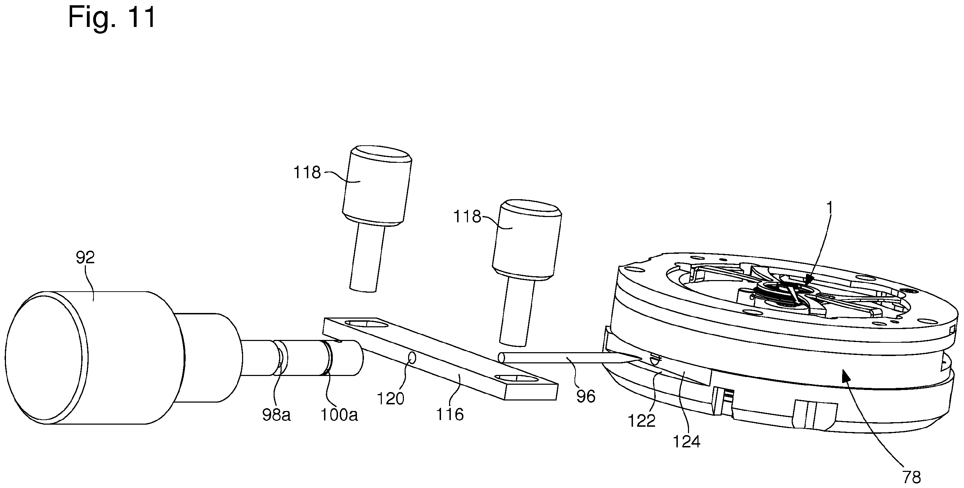

Plus précisément et comme illustré à la figure 10, le dispositif de mesure de l'altitude 1 est reçu dans la cuve étanche 84 par un posage 76 muni de deux trous 112 dans lesquels s'engagent deux goupilles 114 qui font saillie dans le fond de la cuve 84. Il est également prévu une lame de maintien 116 retenue par deux vis 118 (figure 11). Cette lame de maintien 116 est percée d'un trou 120 à travers lequel passe la lame de tournevis 96 et vient en appui sur une portée plane 122 ménagée dans le couvercle 78 et délimitée par une paroi plane rectiligne 124 contre laquelle la lame de maintien 116 vient en appui. De la sorte, le couvercle 78 est bloqué axialement et en pivotement à l'intérieur de la cuve 84, ce qui permet, selon le besoin, de visser ou de dévisser le support 68 et donc de faire monter ou descendre le capteur de pression atmosphérique 2 par rapport aux autres composants du dispositif de mesure de l'altitude 1 lors des opérations d'étalonnage de ce dernier. Pour la fermeture étanche de la cuve 84, la glace 86 est munie de deux crochets 126 qui coopèrent avec deux verrous 128 fixés sur le bâti 130 de la cuve 84.

L'étalonnage du dispositif de mesure de l'altitude 1 s'effectue de la manière suivante.

Tout d'abord, on introduit le dispositif de mesure de l'altitude 1 selon l'invention dans la cuve 84. Le dispositif de mesure de l'altitude 1 est immobilisé à l'intérieur de la cuve 84 grâce à la lame de maintien 116 que l'on bloque en serrant les vis 118. Au préalable, on s'assure que les goupilles 108 soient bien introduites dans les trous correspondants 110 ménagés dans le support 68. Pour ce faire, il suffit de faire tourner la roue dentée 106 jusqu'à ce que les goupilles 108 pénètrent dans les trous 110. On referme la cuve 84 de manière étanche au moyen des verrous 128 qui viennent en prise avec les crochets 126. On s'assure que le joint d'étanchéité 88 est bien en place.

Ensuite, on amène la pression atmosphérique à l'intérieur de la cuve 84 à une valeur de 1013,25 hPa qui correspond à la pression atmosphérique moyenne qui règne au niveau de la mer à 0 mètre d'altitude et l'on observe la position du segment rectiligne de points de contact 42 par rapport à l'axe de transmission 30. Si nécessaire, on tourne le second bouton 94 dans un sens ou l'autre, de façon à visser ou dévisser le support 68 et donc faire monter ou descendre le capteur de pression atmosphérique 2. Le mouvement de translation du capteur de pression atmosphérique 2 est communiqué au râteau 40 via le palpeur 22 et la goupille de transmission 38. Le dispositif de mesure de l'altitude 1 est convenablement réglé pour l'altitude au niveau de la mer lorsque le segment rectiligne de points de contact 42 s'étend parallèlement à l'axe de transmission 30.

Enfin, on réduit la pression atmosphérique à l'intérieur de la cuve 84 à une valeur correspondant par exemple à une altitude de 4000 mètres. Si l'aiguille indicatrice 10 ne pointe pas sur la graduation 4000 de l'échelle circulaire 12 reportée sur le rehaut 14, on déplace axialement l'axe de transmission 30 en vissant ou en dévissant la vis de réglage 34 au moyen du premier bouton 92.

Lorsque ces deux opérations décrites ci-dessus ont été effectuées, l'étalonnage du dispositif de mesure de l'altitude 1 est achevé. Pour s'en assurer, il suffit par exemple d'augmenter à nouveau la pression atmosphérique à l'intérieur de la cuve 84 jusqu'à une valeur correspondant au niveau de la mer, et l'on constatera que l'aiguille indicatrice 10 pointe sur la graduation 0 de l'échelle circulaire 12.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra notamment que les opérations d'étalonnage du dispositif de mesure de l'altitude 1 peuvent être facilement automatisées. En effet, il suffit de disposer d'une caméra capable de repérer la position du segment rectiligne de points de contact 42 par rapport à l'axe de transmission 30 et de repérer la position de l'aiguille indicatrice 10 par rapport à l'échelle circulaire 12 matérialisée sur le rehaut 14. Une telle caméra sera complétée par un dispositif d'actionnement des boutons 92, 94. On comprendra également que de telles opérations d'étalonnage sont réalisées en usine et que le dispositif de mesure de l'altitude est livré à son utilisateur parfaitement réglé. Si, au cours d'un déplacement, l'utilisateur constate que l'altitude indiquée par son dispositif de mesure de l'altitude ne correspond pas à l'altitude du lieu où il se trouve, il lui suffira de tourner le rehaut pour amener l'indication sur l'échelle circulaire 12 correspondant à l'altitude à laquelle il se trouve en face de l'aiguille indicatrice 10. On note également que les opérations d'étalonnage sont effectuées à température ambiante, typiquement 23°C. Une fois le dispositif de mesure de l'altitude 1 convenablement étalonné, il est possible de brider les filetages du support 68 et du couvercle 78 ainsi que la vis de réglage 34 par exemple à l'aide de cire ou par collage afin d'éviter que le dispositif de mesure de l'altitude 1 ne se dérègle.

### Nomenclature

Dispositif de mesure de l'altitude 1
Capteur de pression atmosphérique 2
Tôles supérieure 4a et inférieure 4b
Système de transmission 6
Système d'actionnement 8
Aiguille indicatrice 10
Echelle circulaire 12
Rehaut 14
Boîte 16
Montre-bracelet 18
Lunette rotative 20
Palpeur 22
Bras 24
Roulette 26
Rondelle 28
Axe de transmission 30
Pierres 32
Vis de réglage 34
Lame élastique 36
Goupille de transmission 38
Râteau 40
Segment rectiligne de points de contact 42
Axe de pivotement vertical 44
Secteur denté 46
Pignon 48
Tube 50
Ressort hélicoïdal 52
Piton 54
Ressort en spires 56
Courbe à l'intérieur 58
Courbe à l'extérieur 60
Piton 62
Roulement à billes 64
Cadran 65
Siège 66
Support 68
Bride de rattrapage de jeu 70
Premier filetage 72
Second filetage 74
Posage 76
Couvercle 78
Boîtier 80
Dispositif d'étalonnage étanche 82
Cuve 84
Glace 86
Joint d'étanchéité 88
Prise d'air 90
Premier bouton 92
Second bouton 94
Lame de tournevis 96
Pierres 98a, 98b
Joints d'étanchéité 100a, 100b
Tige 102
Pignon 104
Roue dentée 106
Goupilles 108
Trous 110
Trous 112
Goupilles 114
Lame de maintien 116
Vis 118
Trou 120
Portée plane 122
Paroi plane rectiligne 124
Crochets 126
Verrous 128
Bâti 130

## Revendications

1. Dispositif étanche d'étalonnage d'un dispositif de mesure de l'altitude (1), ce dispositif de mesure de l'altitude (1) comprenant un capteur de pression atmosphérique (2) agencé pour se comprimer ou se détendre selon une direction rectiligne en fonction de la pression atmosphérique à mesurer qui augmente ou qui diminue, les mouvements de déformation du capteur de pression atmosphérique (2) étant transformés, via un système de transmission (6), en un mouvement de pivotement dans un plan perpendiculaire à la direction rectiligne de déformation du capteur de pression atmosphérique (2) d'un système d'actionnement (8) qui entraîne une aiguille indicatrice (10) en pivotement, cette aiguille indicatrice (10) se déplaçant en regard d'une échelle circulaire graduée (12), le capteur de pression atmosphérique (2) étant monté sur un support (68), ce support (68) étant doté sur sa périphérie extérieure d'un premier filetage (72) qui coopère avec un second filetage (74) prévu sur la périphérie intérieure d'un couvercle (78), le système de transmission (6) comprenant un palpeur (22) formé d'un bras (24) par une extrémité libre duquel le palpeur (22) est en appui sur le capteur de pression atmosphérique (2), le palpeur (22) étant fixé rigidement sur un axe de transmission (30) qui s'étend selon une direction perpendiculaire à la direction rectiligne de déformation du capteur de pression atmosphérique (2), l'axe de transmission (30) étant monté mobile selon son axe de symétrie longitudinale entre une vis de réglage (34) et une lame élastique (36), le dispositif étanche d'étalonnage (82) étant **caractérisé en ce qu'**il comporte une prise d'air (90) qui permet d'ajuster la pression à l'intérieur de ce dispositif d'étalonnage selon les besoins, le dispositif d'étalonnage (82) comprenant également un premier et un second boutons (92, 94) pour le réglage du dispositif de mesure de l'altitude (1), le premier bouton (92) étant prolongé vers l'intérieur du dispositif d'étalonnage par une lame de tournevis (96) grâce à laquelle on peut actionner la vis de réglage (34) permettant de régler la position axiale de l'axe de transmission (30), et le second bouton (94) comprenant une tige (102) qui, à son extrémité libre, porte un pignon (104) qui coopère avec une roue dentée (106) qui s'étend horizontalement et qui porte dans sa planche deux goupilles (108) qui viennent se loger dans deux trous correspondants (110) ménagés dans le support (68) de façon qu'en actionnant le second bouton (94) dans un sens ou l'autre, il est possible de visser ou de dévisser le support (68) et de faire monter ou descendre le capteur de pression atmosphérique (2).

2. Dispositif étanche d'étalonnage selon la revendication 1, **caractérisé en ce qu'**un joint d'étanchéité (100a) est engagé sur la lame de tournevis (96) pour garantir l'étanchéité du passage du premier bouton (92) et **en ce qu'**un joint d'étanchéité (100b) est engagé sur la tige (102) pour garantir l'étanchéité du passage du second bouton (94).

3. Dispositif étanche d'étalonnage selon l'une quelconque des revendications 1 ou 2, **caractérisé en ce qu'**il s'agit d'une cuve (84).

4. Dispositif étanche d'étalonnage selon la revendication 3, **caractérisé en ce que** la cuve (84) est fermée par une glace (86) avec interposition d'un joint d'étanchéité (88).

5. Procédé d'étalonnage d'un dispositif de mesure de l'altitude au moyen d'un dispositif d'étalonnage (82), ce dispositif de mesure de l'altitude (1) comprenant un capteur de pression atmosphérique (2) agencé pour se comprimer ou se détendre selon une direction rectiligne en fonction de la pression atmosphérique à mesurer qui augmente ou qui diminue, les mouvements de déformation du capteur de pression atmosphérique (2) étant transformés, via un système de transmission (6), en un mouvement de pivotement dans un plan perpendiculaire à la direction rectiligne de déformation du capteur de pression atmosphérique (2) d'un système d'actionnement (8) qui entraîne une aiguille indicatrice (10) en pivotement, cette aiguille indicatrice (10) se déplaçant en regard d'une échelle circulaire graduée (12), le capteur de pression atmosphérique (2) étant monté sur un support (68), ce support (68) étant doté sur sa périphérie extérieure d'un premier filetage (72) qui coopère avec un second filetage (74) prévu sur la périphérie intérieure d'un couvercle (78), le système de transmission (6) comprenant un palpeur (22) formé d'un bras (24) par une extrémité libre duquel le palpeur (22) est en appui sur le capteur de pression atmosphérique (2), le palpeur (22) étant fixé rigidement sur un axe de transmission (30) qui s'étend selon une direction perpendiculaire à la direction rectiligne de déformation du capteur de pression atmosphérique (2), l'axe de transmission (30) étant monté mobile selon son axe de symétrie longitudinale entre une vis de réglage (34) et une lame élastique (36), une goupille de transmission (38) fixée rigidement sur l'axe de transmission (30) coopérant avec le système d'actionnement (8) selon un segment rectiligne de points de contact (42) pour communiquer à ce système d'actionnement (8) les mouvements de déformation du capteur de pression atmosphérique (2), le procédé d'étalonnage étant **caractérisé en ce qu'**il comprend les étapes qui consistent à placer le système de mesure de l'altitude (1) sous une pression atmosphérique de 1013,25 hPa grâce au dispositif d'étalonnage (82) qui comprend une prise d'air (90) permettant d'ajuster la pression à l'intérieur du dispositif d'étalonnage (82) selon les besoins, et à agir sur le système de transmission (6) de façon à amener le segment rectiligne de points de contact (42) parallèle à l'axe de transmission (30) grâce au dispositif d'étalonnage (82) qui comprend un premier et un second boutons (92, 94), le premier bouton (92) étant prolongé vers l'intérieur du dispositif d'étalonnage (82) par une lame de tournevis (96) grâce à laquelle on peut actionner la vis de réglage (34) permettant de régler la position axiale de l'axe de transmission (30), et le second bouton (94) comprenant une tige (102) grâce à laquelle il est possible de visser ou de dévisser le support (68) et de faire monter ou descendre le capteur de pression atmosphérique (2) en actionnant le second bouton (94) dans un sens ou l'autre, puis à réduire la pression atmosphérique à une valeur choisie correspondant à une altitude déterminée et à ajuster la position du capteur de pression atmosphérique (2) de manière à amener l'aiguille indicatrice (10) en regard de la valeur d'altitude sur l'échelle circulaire graduée (12) correspondant à la valeur choisie de la pression atmosphérique.

## Patentansprüche

1. Dichte Eichungsvorrichtung einer Höhenmessvorrichtung (1), wobei diese Höhenmessvorrichtung (1) einen Atmosphärendrucksensor (2) umfasst, der dafür ausgelegt ist, sich in einer geraden Richtung in Abhängigkeit des zu messenden Atmosphärendrucks, der zunimmt oder abnimmt, zusammenzuziehen oder entsprechend auszudehnen, wobei die Verformungsbewegungen des Atmosphärendrucksensors (2) über ein Übertragungssystem (6) in eine Drehbewegung in einer Ebene senkrecht zu der geraden Verformungsrichtung des Atmosphärendrucksensors (2) eines Betätigungssystems (8), das eine drehbare Anzeigenadel (10) antreibt, transformiert werden, wobei sich diese Anzeigenadel (10) gegenüber einer kreisförmigen, unterteilten Skala (12) verlagert, wobei der Atmosphärendrucksensor (2) auf einem Träger (68) befestigt ist, wobei dieser Träger (68) an seinem äußeren Umfang mit einem ersten Gewinde (72) versehen ist, das mit einem zweiten Gewinde (74) zusammenwirkt, das am inneren Umfang eines Deckels (78) vorgesehen ist, wobei das Übertragungssystem (6) einen Fühler (22) umfasst, der aus einem Arm (24) gebildet ist, wobei sich der Fühler (22) durch ein freies Ende des Arms auf dem Atmosphärendrucksensor (2) abstützt, wobei der Fühler (22) an einer Übertragungsachse (30), die sich in einer Richtung senkrecht zu der geraden Verformungsrichtung des Atmosphärendrucksensors (2) erstreckt, starr befestigt ist, wobei die Übertragungsachse (30) längs ihrer longitudinalen Symmetrieachse zwischen einer Stellschraube (34) und einem elastischen Plättchen (36) beweglich befestigt ist, wobei die dichte Eichungsvorrichtung (82) **dadurch gekennzeichnet ist, dass** sie einen Lufteinlass (90) aufweist, der ermöglicht, den Druck im Inneren dieser Eichungsvorrichtung je nach Bedarf einzustellen, wobei die Eichungsvorrichtung (82) außerdem eine erste und eine zweite Taste (92, 94) für die Einstellung der Höhenmessvorrichtung (1) umfasst, wobei die erste Taste (92) in den Innenraum der Eichungsvorrichtung durch eine Schraubendreherklinge (96) verlängert ist, kraft derer die Stellschraube (34) betätigt werden kann, was ermöglicht, die axiale Position der Übertragungsachse (30) einzustellen, und wobei die zweite Taste (94) einen Stift (102) umfasst, der an seinem freien Ende ein Ritzel (104) trägt, das mit einem Zahnrad (106) zusammenwirkt, das sich horizontal erstreckt und das in seiner Fläche zwei Stifte (108) trägt, die sich in zwei entsprechenden Löchern (110) befinden, die in dem Träger (68) ausgebildet sind, derart, dass es durch Betätigen der zweiten Taste (94) in dem einen oder dem anderen Richtungssinn möglich ist, den Träger (68) festzuschrauben oder loszuschrauben und den Atmosphärendrucksensor (2) anzuheben oder abzusenken.

2. Dichte Eichungsvorrichtung nach Anspruch 1, **dadurch gekennzeichnet, dass** eine Dichtung (100a) an der Schraubendreherklinge (96) angreift, um die Dichtigkeit des Durchgangs der ersten Taste (92) zu gewährleisten, und dass eine Dichtung (100b) an dem Stift (102) angreift, um die Dichtigkeit des Durchgangs der zweiten Taste (94) zu gewährleisten.

3. Dichte Eichungsvorrichtung nach einem der Ansprüche 1 oder 2, **dadurch gekennzeichnet, dass** es sich um einen Behälter (84) handelt.

4. Dichte Eichungsvorrichtung nach Anspruch 3, **dadurch gekennzeichnet, dass** der Behälter (84) durch ein Glas (86) verschlossen ist, wobei dazwischen eine Dichtung (88) eingefügt ist.

5. Verfahren zum Eichen einer Höhenmessvorrichtung mittels einer Eichungsvorrichtung (82), wobei diese Höhenmessvorrichtung (1) einen Atmosphärendrucksensor (2) umfasst, der dafür ausgelegt ist, sich in einer geraden Richtung in Abhängigkeit des zu messenden Atmosphärendrucks, der zunimmt oder abnimmt, zusammenzuziehen oder entsprechend auszudehnen, wobei die Verformungsbewegungen des Atmosphärendrucksensors (2) über ein Übertragungssystem (6) in eine Drehbewegung in einer Ebene senkrecht zu der geraden Verformungsrichtung des Atmosphärendrucksystems (2) eines Betätigungssystems (8), das eine drehbare Anzeigenadel (10) antreibt, transformiert werden, wobei sich diese Anzeigenadel (10) gegenüber einer kreisförmigen, unterteilten Skala (12) verlagert, wobei der Atmosphärendrucksensor (2) auf einem Träger (88) befestigt ist, wobei dieser Träger (88) an seinem äußeren Umfang mit einem ersten Gewinde (72) versehen ist, das mit einem zweiten Gewinde (74) zusammenwirkt, das an dem inneren Umfang eines Deckels (78) vorgesehen ist, wobei das Übertragungssystem (6) einen Fühler (22) umfasst, der aus einem Arm (24) gebildet ist, wobei sich der Fühler (22) an einem freien Ende des Arms auf dem Atmosphärendrucksensor (2) abstützt, wobei der Fühler (22) an einer Übertragungsachse (30), die sich in einer Richtung senkrecht zu der geraden Verformungsrichtung des Atmosphärendrucksensors (2) erstreckt, starr befestigt ist, wobei die Übertragungsachse (30) längs einer longitudinalen Symmetrieachse zwischen einer Stellschraube (34) und einem elastischen Plättchen (36) beweglich befestigt ist, wobei ein Übertragungszapfen (38) an der Übertragungsachse (30) starr befestigt ist und mit dem Betätigungssystem (8) längs eines geraden Kontaktpunktsegments (42) zusammenwirkt, um die Verformungsbewegungen des Atmosphärendrucksensors (2) an dieses Betätigungssystem (8) zu übertragen, wobei das Eichungsverfahren **dadurch gekennzeichnet ist, dass** es die Schritte umfasst, die darin bestehen, das Höhenmesssystem (1) kraft der Eichungsvorrichtung (82) auf einen Atmosphärendruck von 1013,25 hPa zu bringen, wobei die Eichungsvorrichtung (82) einen Lufteinlass (90) umfasst, der ermöglicht, den Druck im Inneren der Eichungsvorrichtung (82) je nach Bedarf einzustellen, und auf das Übertragungssystem (6) in einer Weise einzuwirken, dass das gerade Kontaktpunktsegment (42) kraft der Eichungsvorrichtung (82) parallel zu der Übertragungsachse (30) orientiert wird, wobei die Eichungsvorrichtung eine erste und eine zweite Taste (92, 94) umfasst, wobei die erste Taste (92) in dem Innenraum der Eichungsvorrichtung (82) durch eine Schraubendreherklinge (96) verlängert ist, kraft derer die Stellschraube (34) betätigt werden kann, was ermöglicht, die axiale Position der Übertragungsachse (30) einzustellen, und wobei die zweite Taste (94) einen Stift (102) umfasst, kraft dessen es möglich ist, den Träger (68) festzuschrauben oder loszuschrauben und den Atmosphärendrucksensor (2) anzuheben oder abzusenken, indem die zweite Taste (94) in dem einen oder dem anderen Richtungssinn betätigt wird, und dann den Atmosphärendruck auf einen gewählten Wert abzusenken, der einer bestimmten Höhe entspricht, und die Position des Atmosphärendrucksensors (2) in der Weise einzustellen, dass die Anzeigenadel (10) auf den Höhenwert auf der kreisförmigen, unterteilten Skala (12) gebracht wird, der dem gewählten Wert des Atmosphärendrucks entspricht.

## Claims

1. Sealed device for calibrating an altitude measurement device (1), said altitude measurement device (1) including an atmospheric pressure sensor (2) arranged to be compressed or to expand in a rectilinear direction as a function of the atmospheric pressure to be measured which increases or decreases, the movements of deformation of the atmospheric pressure sensor (2) being converted, via a transmission system (6), into a pivoting motion, in a plane perpendicular to the rectilinear direction of deformation of the atmospheric pressure sensor (2), of an activation system (8) which drives the pivoting of an indicator hand (10), said indicator hand (10) moving opposite a graduated circular scale (12), the atmospheric pressure sensor (2) being mounted on a support (68), said support (68) being provided on the external periphery thereof with a first thread (72) which cooperates with a second thread (74) provided on the inner periphery of a cover (78), the transmission system (6) including a sensing element (22) formed of an arm (24), via a free end of which the sensing element (22) bears on the atmospheric pressure sensor (2), the sensing element (22) being rigidly fixed to a transmission shaft (30) which extends in a perpendicular direction to the rectilinear direction of deformation of the atmospheric pressure sensor (2), the transmission shaft (30) being movably mounted along the longitudinal axis of symmetry thereof between an adjustment screw (34) and a resilient strip (36), the sealed calibration device (82) being **characterized in that** the device comprises an air intake (90) which can adjust the pressure inside the calibration device as required, the calibration device (82) also including first and second buttons (92, 94) for setting the altitude measurement device (1), the first button (92) being extended towards the inside of the calibration device by a screwdriver blade (96) by means of which the adjustment screw (34) can be activated to adjust the axial position of the transmission shaft (30), and the second button (94) comprising a shaft (102) which, at the free end thereof, carries a pinion (104) which cooperates with a toothed wheel (106) which extends horizontally and whose plate carries two pins (108) which are received in two corresponding holes (110) provided in the support (68), so that by activating the second button (94) in one direction or the other, it is possible to screw-in or unscrew the support (68) and to move the atmospheric pressure sensor (2) up or down.

2. Sealed calibration device according to claim 1, **characterized in that** a sealing gasket (100a) is engaged on the screwdriver blade (96) in order to seal the passage of the first button (92), and **in that** a sealing gasket (100b) is engaged on the shaft (102) in order to seal the passage of the second button (94).

3. Sealed calibration device according to any of claims 1 or 2, **characterized in that** the device is a chamber (84).

4. Sealed calibration device according to claim 3, **characterized in that** the chamber (84) is closed by a glass (85) with the insertion of a sealing gasket (88).

5. Method for calibrating an altitude measurement device by means of a calibration device (82), said altitude measurement device (1) including an atmospheric pressure sensor (2) arranged to be compressed or to expand in a rectilinear direction as a function of the atmospheric pressure to be measured which increases or decreases, the movements of deformation of the atmospheric pressure sensor (2) being converted, via a transmission system (6), into a pivoting motion, in a plane perpendicular to the rectilinear direction of deformation of the atmospheric pressure sensor (2), of an activation system (8) which drives the pivoting of an indicator hand (10), said indicator hand (10) moving opposite a graduated circular scale (12), the atmospheric pressure sensor (2) being mounted on a support (68), said support (68) being provided on the external periphery thereof with a first thread (72) which cooperates with a second thread (74) provided on the inner periphery of a cover (78), the transmission system (6) including a sensing element (22) formed of an arm (24), via a free end of which the sensing element (22) bears on the atmospheric pressure sensor (2), the sensing element (22) being rigidly fixed to a transmission shaft (30) which extends in a perpendicular direction to the rectilinear direction of deformation of the atmospheric pressure sensor (2), the transmission shaft (30) being movably mounted along the longitudinal axis of symmetry thereof between an adjustment screw (34) and a resilient strip (36), a transmission pin (38) rigidly fixed to the transmission shaft (30) cooperating with the activation system (8) along a rectilinear segment (42) of contact points to communicate to said activation system (8) the movements of deformation of the atmospheric pressure sensor (2), the calibration method being **characterized in that** the method includes the steps of placing the altitude measurement system (1) under an atmospheric pressure of 1013.25 hPa owing to the calibration device (82) that comprises an air intake (90) which can adjust the pressure inside the calibration device (82) as required, and of acting on the transmission system (6) so as to place the rectilinear segment (42) of contact points parallel to the transmission shaft (30) owing to the calibration device (82) that comprises a first and a second button (92, 94), the first button (92) being extended towards the inside of the calibration device (82) by a screwdriver blade (96) by means of which the adjustment screw (34) can be activated to adjust the axial position of the transmission shaft (30), and the second button (94) comprising a shaft (102) owing to which it is possible to screw-in or unscrew the support (68) and to move the atmospheric pressure sensor (2) up or down by activating the second button (94) in one direction or the other, then in reducing the atmospheric pressure to a selected value corresponding to a determined altitude and in adjusting the position of the atmospheric pressure sensor (2) so as to place the indicator hand (10) opposite the altitude value on the graduated circular scale (12) that corresponds to the selected atmospheric pressure value.
